# EUROPEAN PATENT APPLICATION

(11) **EP 4 591 693 A1**
(43) Date of publication of application: **30.07.2025**
(21) Application number: 24220336.2
(22) Date of filing: 16.12.2024
(51) Int. Cl.: A01C 7/08, A01C 7/10, A01C 15/04

(54) **METHOD OF CONTROLLING A BLOWER ON AN AGRICULTURAL AIR CART**

(30) Priority: 29.01.2024 US 202418425526
(71) Applicant: Deere & Company, Moline, IL 61265 (US)
(72) Inventor: Kale, Mandar M., Mannheim (DE); Nerellakunta, Venkata Nagendra Pavan Kumar, Mannheim (DE); Rafac, Kyle, Mannheim (DE); Hoff, Aaron K., Mannheim (DE)
(74) Representative: Reichert, Christian

(57) **Abstract**

A method of controlling a blower on an agricultural air cart is disclosed. The method comprising: identifying (314) a first target blower speed based on a first application rate at which material is applied to a field from the agricultural air cart; controlling (314) the blower based on the first target blower speed; detecting (316) a reduction of the application rate to zero within a threshold time period; controlling (322) the blower to maintain the first target blower speed after the application rate is zero; detecting (324) an application rate change to a non-zero application rate; identifying (326) a second target blower speed based on the non-zero application rate; and controlling (308) the blower based on the second target blower speed.

## Description

### FIELD OF THE DESCRIPTION

The present description relates to agricultural equipment. More specifically, the present description relates to a system that controls blower speed on an air cart.

### BACKGROUND

There are a wide variety of different types of agricultural equipment that can be used to plant seeds or apply other commodities to a field. Such equipment can include air seeders. Air seeders have an air cart with one or more central seed or commodity tanks. The seed or commodity in the tank is metered by a metering system into common product delivery tubes called "primaries". The seed or commodity is delivered (using air delivery) to a tool for disbursement. The tool disburses the product into secondary tubes which deliver the product to individual furrows opened by the tool. The furrows are opened by a furrow opener and closed after seed is delivered to the furrow by a closer.

There may be multiple tanks and multiple metering systems. The rate at which material is metered into the primaries depends on the desired rate of application of the material onto the field (the desired application rate).

The discussion above is merely provided for general background information and is not intended to be used as an aid in determining the scope of the claimed subject matter.

### SUMMARY

A blower on an air cart generates air flow to carry material to a tool for delivery to a furrow in a field. The blower receives hydraulic flow from a hydraulic source on a towing vehicle. A control system controls blower speed based on a rate of application of the material.

Example 1 is a method, comprising:
detecting a blower type of blower on an agricultural air cart;
identifying a first target blower speed based on an application rate at which material is applied to a field from the air cart;
accessing a set of stored blower control values to identify a first hydraulic fluid control signal value based on the first target blower speed;
controlling a controllable hydraulic fluid source to provide hydraulic fluid to the blower based on the first hydraulic fluid control signal value;
detecting the blower speed to obtain a detected blower speed;
generating a closed loop hydraulic fluid control signal value to bring the detected blower speed within a threshold value of the first target blower speed; and
updating the stored blower control values based on the closed loop hydraulic fluid control signal value.

Example 2 is the method of any or all previous examples and further comprising:
detecting a second target blower speed;
identifying a second hydraulic fluid control signal value based on the second target blower speed; and
controlling the controllable hydraulic fluid source based on the second hydraulic fluid control signal value.

Example 3 is the method of any or all previous examples wherein detecting a second target blower speed comprises:
detecting an application rate change; and
accessing the stored blower control values to identify the second target blower speed based on the application rate change.

Example 4 is the method of any or all previous examples wherein controlling the controllable hydraulic fluid source based on the second hydraulic fluid control signal value comprises: detecting that the second target blower speed is slower than the first target blower speed.

Example 5 is the method of any or all previous examples wherein controlling the controllable hydraulic fluid source based on the second hydraulic fluid control signal value comprises: detecting a magnitude of a difference between the first target blower speed and the second target blower speed.

Example 6 is the method of any or all previous examples and wherein controlling the controllable hydraulic fluid source based on the second hydraulic fluid control signal value comprises:
if the magnitude of the difference between the first target blower speed and the second target blower speed meets a difference threshold value, then controlling the controllable hydraulic fluid source to stop providing hydraulic fluid to the blower.

Example 7 is the method of any or all previous examples and wherein controlling the controllable hydraulic fluid source based on the second hydraulic fluid control signal value comprises: detecting blower speed; and if the detected blower speed is within a threshold value of the second target blower speed, controlling the controllable hydraulic fluid source based on the second hydraulic fluid control signal value.

Example 8 is the method of any or all previous examples and wherein controlling the controllable hydraulic fluid source based on the second hydraulic fluid control signal value comprises:
if the detected blower speed is below a threshold value of the second target blower speed, generating a second closed loop hydraulic fluid control signal value to bring the detected blower speed within a threshold value of the second target blower speed.

Example 9 is a method of controlling a blower on an agricultural air cart, comprising: identifying a first target blower speed based on a first application rate at which material is applied to a field from the agricultural air cart;
controlling the blower based on the first target blower speed;
detecting a reduction of the application rate to zero within a threshold time period;
controlling the blower to maintain the first target blower speed after the application rate is zero; detecting an application rate change to a non-zero application rate;
identifying a second target blower speed based on the non-zero application rate; and controlling the blower based on the second target blower speed.

Example 10 is the method of any or all previous examples wherein identifying an application rate change, comprises:
detecting a commanded application rate change.

Example 11 is the method of any or all previous examples wherein identifying an application rate change, comprises:
sensing the application rate; and
determining that the sensed application rate is non-zero.

Example 12 is the method of any or all previous examples wherein controlling the blower based on the second target blower speed comprises:
accessing a set of stored blower control values to identify a hydraulic fluid control signal value based on the second target blower speed;
controlling a controllable hydraulic fluid source to provide hydraulic fluid to the blower based on the hydraulic fluid control signal value; and
generating a closed loop hydraulic fluid control signal value to bring the blower speed within a threshold value of the second target blower speed.

Example 13 is the method of any or all previous examples wherein controlling the blower based on the second blower speed comprises:
detecting that the second target blower speed is slower than the first target blower speed;
detecting a magnitude of a difference between the first target blower speed and the second target blower speed; and
if the magnitude of the difference between the first target blower speed and the second target blower speed meets a difference threshold value, then before generating the closed loop control signal value, controlling the controllable hydraulic fluid source to stop providing hydraulic fluid to the blower.

Example 14 is the method of any or all previous examples wherein controlling the blower based on the second blower speed comprises:
detecting a sensor signal indicative of detected blower speed; and
if the detected blower speed is within a threshold value of the second target blower speed, controlling the controllable hydraulic fluid source based on the second hydraulic fluid control signal value.

Example 15 is the method of any or all previous examples wherein controlling the blower based on the second blower speed comprises:
detecting whether the detected blower speed is below a threshold value of the second target blower speed; and
if so, generating a second closed loop hydraulic fluid control signal value to bring the detected blower speed within a threshold value of the second target blower speed.

Example 16 is a method, comprising:
controlling a blower on an air cart based on a first target blower speed;
identifying a second target blower speed;
if the second target blower speed is less that the first target blower speed by a threshold amount, then commanding the blower to a blower speed of zero;
detecting blower speed; and
when the detected blower speed is within a threshold value of the second target blower speed, then performing closed loop control of the blower based on the detected blower speed, the threshold value, and the second target blower speed.

Example 17 is the method of any or all previous examples wherein controlling the blower on the air cart based on a first target blower speed comprises:
detecting an application rate of material applied by the air cart; and
identifying the first target blower speed based on the detected application rate.

Example 18 is the method of any or all previous examples wherein detecting the application rate comprises:
detecting an operator input command commanding the application rate.

Example 19 is the method of any or all previous examples wherein detecting the application rate comprises:
detecting a rate at which the material is metered by the air cart.

Example 20 is the method of any or all previous examples wherein identifying a second blower speed comprises:
identifying a change in the application rate; and
identifying the second target blower speed based on the change in application rate.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial block diagram illustrating an agricultural system in which an air seeder is towed by a tractor.
FIG. 2 is a perspective view of an air cart.
FIG. 3 is perspective view of metering devices and primary delivery tubes.
FIG. 4 is a block diagram showing one example of a blower control system.
FIGS. 5A and 5B (collectively referred to herein as FIG. 5) show a flow diagram illustrating one example of the operation of the blower control system.
FIG. 6 is a block diagram of a rate lock processor.
FIG. 7 is a flow diagram showing one example of the operation of the rate lock processor.
FIG. 8 is a block diagram of one example of a look-ahead processor.
FIG. 9 is a flow diagram showing one example of the operation of the look-ahead processor.
FIG. 10 is a block diagram of one example of shared flow processor.
FIGS. 11 and 12 are flow diagrams showing examples of the operation of the shared flow processor.
FIG. 13 is a block diagram showing one example of an agricultural system in a remote server architecture.
FIGS. 14-16 show examples of mobile devices that can be used in the systems and architectures shown in the previous FIGS.
FIG. 17 is a block diagram of one example of a computing environment that can be used in the systems and architectures shown in the previous FIGS.

### DETAILED DESCRIPTION

As discussed above, air seeders have an air cart with one or more tanks that hold material to be delivered to the field. The air cart also has a metering system corresponding to each tank. The metering system meters material from the corresponding tank into a primary delivery tube and a fan blows air through that tube in order to move the material through the primary delivery tube to a seeding tool. The seeding tool receives material from the primary delivery tube and a distribution manifold disperses the material into a plurality of secondary delivery tubes. Each secondary delivery tube delivers material to a particular furrow that is opened by a furrow opener on the tool. After the material is placed in the furrow, the furrow can be closed by a furrow closer on the tool. The rate at which a commodity (seed or other commodity) is delivered to a field may vary. Thus, depending on the speed of the air cart, the amount of commodity delivered into each primary from the metering system will vary in order to meet a prescribed application rate. It may be desirable to control the speed of the blower (e.g., the rpms of the blower) based upon the rate of application. For example, when material is metered into the primaries at a higher rate, it may be desirable to increase the air flow through the primaries (by increasing the speed of the blower) so that the material can be carried by the air flow to the seeding tool and dispersed into the furrows without plugging the primaries or other delivery conduits. If one of the primaries becomes plugged, for example, it can be time consuming and cumbersome to clear material from the primary. However, it may also be desirable to control the blower so that there is not too much air flow. For instance, if the blower is set to deliver too much air flow to the primaries, then the commodity can be blown out of the furrows as it is disbursed by the seeding tool.

Thus, the present description, in one example, describes a system that controls the blower speed on the air cart based upon application rate. This, however, can present its own difficulties. The blower is often hydraulically driven by hydraulic fluid under pressure received from a hydraulic pump on a towing vehicle (such as a tractor). In order to control the speed of the blower based upon application rate, a control system must know how to control the hydraulic fluid source to generate a target blower speed. This can be difficult and error prone.

Further, the blower speed does not change instantaneously. For instance, it takes some time to ramp the blower speed up to a desired speed from a lower speed and it also takes time to ramp the blower speed down to a lower speed from a higher speed. Further, different types of blowers may generate different airflow profiles based upon blower speed and based upon hydraulic fluid input. This further exacerbates the difficulties in knowing how to control hydraulic flow to obtain a target blower speed.

Also, it is not uncommon for the hydraulic fluid under pressure that is provided by the source of hydraulic fluid on the tractor to be shared among different components or functionality on the air cart or seeding tool. For instance, the blower may share hydraulic fluid flow with downforce actuators on the seeding tool. Thus, when the downforce actuators are being actuated, this may result in a transient reduction in hydraulic fluid flow to the blower, thus resulting in a momentary reduction in blower speed. Other functions on the air cart or seeding tool may operate in a mutually exclusive fashion with respect to the blower. For instance, the air cart often has a material conveyance subsystem (such as an auger or other conveyer) that can be used to refill the tanks on the air cart. In those scenarios, it is not uncommon for the material conveyance subsystem and the blower to be operated in a mutually exclusive fashion so that, for instance, a diverter valve may be used so when the material conveyance subsystem is actuated and is receiving hydraulic fluid flow, all of the hydraulic fluid under pressure is diverted to the material conveyance subsystem, and away from the blower. By contrast, when the material conveyance subsystem is not calling for hydraulic flow, then the diverter valve may divert all hydraulic fluid under pressure to the blower (or the hydraulic circuit that includes the blower) and away from the material conveyance subsystem.

Thus, in some examples of the present description, a control system generates hydraulic fluid control signals that are correlated to different blower speeds. Therefore, when a desired (target) blower speed is identified (such as a target blower speed for the application rate of material being carried by airflow generated from the blower), a control signal value is generated to obtain that target blower speed. The present description describes a system which can begin by calling for hydraulic fluid using a stored control signal value and then perform closed loop feedback to determine whether the control signal value needs to be changed to obtain the desired blower speed. The system can also learn so that an actual control signal value needed to generate the target blower speed can be stored and used to control the blower during a subsequent operation.

Similarly, one example of the present description describes a system which performs a look ahead operation to see when the prescribed application rate will change in a field. Based upon the location of the change, the location of the air seeder, and the ground speed of the air seeder, the control system can begin to control the blower ahead of time so that the blower is ramped up or ramped down to its desired speed at the point where the application rate changes. Further, when the application rate suddenly changes to zero (such as during a headland turn), the control system can control the blower to maintain the blower speed (the speed generated based upon the application rate just prior to the application rate becoming zero) until a new non-zero application rate is detected, at which point the blower is controlled based on the new non-zero application rate. This avoids the need to turn the blower off during a headland turn and then turned it back on after the turn is made. Instead, the blower remains on during the headland turn so that it need not ramp back up to a desired target speed once the headland turn is completed.

In addition, in one example the present discussion describes a system that controls the blower to accommodate for shared hydraulic functionality. For instance, when the blower is on a hydraulic circuit that shares hydraulic fluid with another subsystem, and that subsystem calls for momentary hydraulic fluid flow, this may result in a drop in hydraulic fluid flow to the blower and thus a resulting drop in blower speed. However, that transient call for hydraulic fluid by the other subsystem may be relatively short lived (such as two-three seconds). This may occur when controlling a downforce actuator, for instance. Therefore, in one example, the control system may detect a reduction in blower speed but wait for a transient time period (e.g., several seconds) to see if the blower speed recovers to its desired target level. If the blower speed recovers, no action is taken. If not, then a control signal is generated to adjust hydraulic fluid flow to the blower. Further, in one example, where the blower shares hydraulic fluid in a mutually exclusive fashion with another subsystem, then when that other subsystem is calling for hydraulic fluid flow, the control system for the blower commands the source of hydraulic fluid to provide a full scale output so that the full hydraulic fluid flow is available to the other subsystem.

The present description may mention automatically performing a step or function or operation. By automatically it is meant, in one example, that the step or function or operation is performed without further human involvement except, perhaps, to initiate and/or authorize the function or operation.

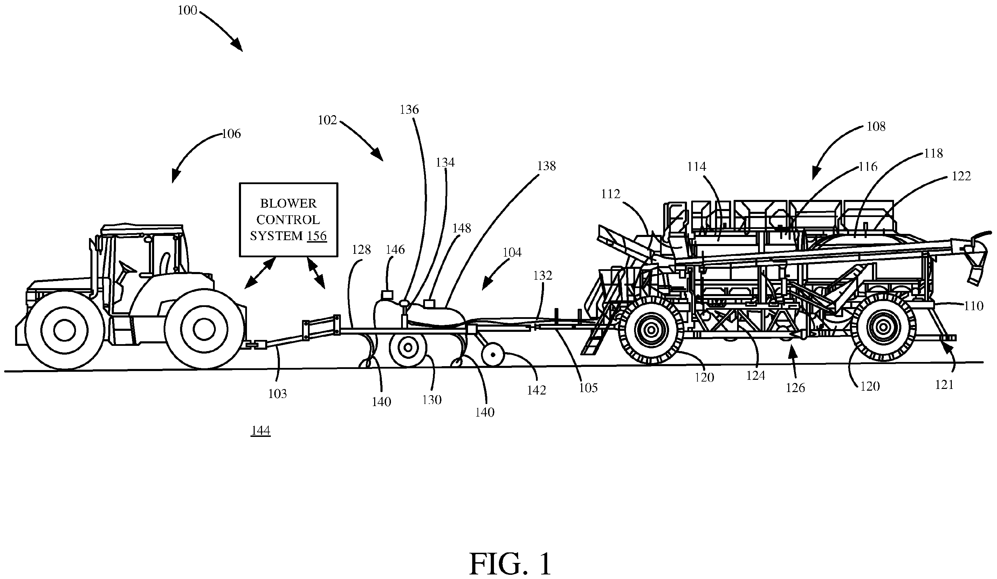

FIG. 1 is a side view of an example of an agricultural system 100 which includes an agricultural implement, in particular an air seeder or pneumatic seeder 102. In the example shown in FIG. 1, the seeder 102 comprises a tilling implement (also referred to as a material application implement or drill or seeding tool) 104 towed between a tractor (or other towing vehicle) 106 and a commodity cart (also sometimes called an air cart) 108. The commodity cart 108 has a frame 110 upon which a series of product tanks 112, 114, 116, and 118, and wheels 120 are mounted. There may be one or more tanks and four tanks are shown in FIG. 1 as an example only. Each product tank has a door (a representative door 122 is labeled) releasably sealing an opening at the upper end of the tank for filling the tank with product, most usually seed or a commodity of one type or another. A metering system 124 is provided at a lower end of each tank (a representative one of which is labeled in FIG. 1 and others are shown and described elsewhere herein) for controlled feeding or draining of product (most typically granular material) into a pneumatic distribution or delivery system 126. The tanks 112, 114, 116, and 118 can hold, for example, a material or commodity such as seed or fertilizer to be distributed to the soil. The tanks can be hoppers, bins, boxes, containers, etc. The term "tank" shall be broadly construed herein. Furthermore, one tank with multiple compartments can also be provided instead of separate tanks.

Air cart 108 may include a movable material conveyance subsystem 127 which may be a conveyor (e.g., an auger) with a spout that is pivotable relative to the frame of air cart 108. Material conveyance subsystem 127 can be positioned relative to a tender vehicle to convey material from the tender vehicle to air cart 108 to refill the tanks 112, 114, 116, and 118, as needed.

The seeding tool 104 includes a frame 128 supported by ground engaging wheels 130. Frame 128 is connected to a leading portion of the commodity cart 108, for example by a tongue style attachment (not labeled). The commodity cart 108 as shown is sometimes called a "tow behind cart," meaning that the cart 108 follows the seeding tool 104. In an alternative arrangement, the cart 108 can be configured as a "tow between cart," meaning the cart 108 is between the tractor 106 and seeding tool 104. In yet a further possible arrangement, the commodity cart 108 and seeding tool 104 can be combined to form a unified rather than separated configuration. These are just examples of additional possible configurations. Other configurations are even possible and all configurations should be considered contemplated and within the scope of the present description. In the example shown in FIG. 1, tractor 106 is coupled by couplings 103 to seeding tool 104 which is coupled by couplings 105 to commodity cart 108. The couplings 103 and 105 can be mechanical, hydraulic, pneumatic, and electrical couplings, and/or other couplings. The couplings 103 and 105 can include wired and wireless couplings as well.

The pneumatic distribution system 126 includes one or more fans or blowers located generally at 121 connected to a product delivery conduit structure having multiple product flow passages 132 referred to as primary delivery tubes 132. The blower 121 directs air through the primary delivery tubes 132. Each product metering system 124 controls delivery of product from its associated tank at a controllable rate to the transporting airstreams moving through primary delivery tubes 132. In this manner, each flow passage defined by each primary delivery tube 132 carries product from one or more of the tanks to a secondary distribution tower 134 on the seeding tool 104. Typically, there will be one tower 134 for each primary delivery tube 132. Each tower 134 includes a secondary distribution manifold 136, typically located at the top of a vertical tube. The secondary distribution manifold 136 divides the flow of product into a number of secondary distribution tubes 138. Each secondary distribution tube 138 delivers product to one of a plurality of ground engaging tools 140 (also known as ground openers or furrow openers) that define the locations of work points on seeding tool 104. The ground engaging tools (or furrow openers) 140 open a furrow in the soil 144 and facilitate deposit of the product therein. The number of primary delivery tubes 132 that feed into secondary distribution tubes may vary from one to eight or ten or more, depending at least upon the configuration of the commodity cart 108 and seeding tool 104. Depending upon the cart and implement, there may be two distribution manifolds 136 in the air stream between the meters 124 and the ground engaging tools 140. Alternatively, in some configurations, the product is metered directly from the tank or tanks into secondary distribution lines that lead to the ground engaging tools 140 without any need for an intermediate distribution manifold. The product metering system 124 can be configured to vary the rate of delivery of seed or other material to each work point on seeding tool 104 or to different sets or zones or sections of work points on seeding tool 104. The configurations described herein are only examples. Other configurations are possible and should be considered contemplated and within the scope of the present description.

A firming or closing wheel 142 associated with each ground engaging tool 140 trails the tool and firms the soil over the product deposited in the soil. In practice, a variety of different types of tools 140 are used including, but not necessarily limited to, tines, shanks and disks. The tools 140 are typically moveable between a lowered position engaging the ground and a raised position riding above the ground. Each individual tool 140 may be configured to be raised by a separate actuator. Alternatively, multiple tools 140 (or sections of tools) may be mounted to a common component for movement together. In yet another alternative, the tools 140 may be fixed to the frame 128, the frame being configured to be raised and lowered with the tools 140.

In one example, tractor 106 includes a hydraulic system that provides hydraulic fluid under pressure to seeder 102. The hydraulic fluid under pressure can power different types of functionality or subsystems on seeder 102. For instance, in one example, the hydraulic fluid under pressure may provide power to actuators that raise and lower tools 140 out of and in to, respectively, the soil. The hydraulic fluid under pressure may provide power to such things as downforce actuators, or other actuators. Similarly, the hydraulic fluid under pressure may be provided to power blower 121 and material conveyance subsystem 127.

Thus, in one example, agricultural system 100 includes a blower control system 156. Blower control system 156 can be used to provide control signals to the source of hydraulic fluid, to the hydraulic circuit (e.g., to control valves or orifices or other items in the hydraulic circuit) in order to control the flow of hydraulic fluid to blower 121. Other control systems can be used to control the flow of hydraulic fluid to the other functionality or subsystems (e.g., to actuators, material conveyance subsystem 127, etc.) on seeder 102. Additionally, a plurality of different sensors can be disposed at different locations in agricultural system 100 to provide sensor signals to blower control system 156, and to other control systems as well. Some examples of blower control system 156, the various sensors, and the operation of agricultural system 100 are described in greater detail elsewhere herein.

Also, it will be appreciated that the source of hydraulic fluid under pressure can be located elsewhere, such as on seeder 102 as well. Further, it will be appreciated that different portions of blower control system 156 can reside on tractor 106, on tool or implement 104, and/or on air cart 108, or all of the elements of blower control system 156 can be located at one place (e.g., on tractor 106). Similarly, elements of blower control system 156 can be distributed to a remote server architecture or located or distributed in other ways.

Examples of air or pneumatic seeder 102 described above should not be considered limiting. The features described in the present description can be applied to any seeder configuration, or other material application machine or material application implement, whether specifically described herein or not.

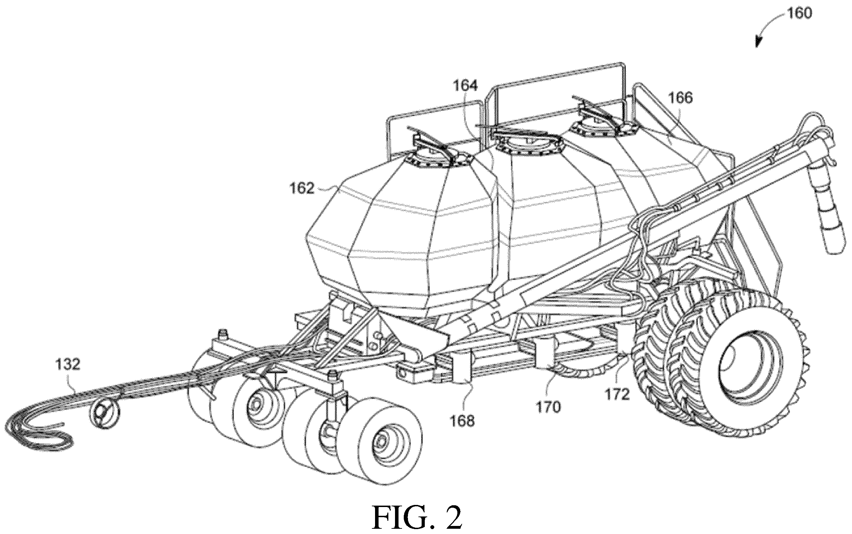

FIG. 2 is a pictorial illustration of another example of an air cart 160. Air cart 160 is similar to air cart 108, except that air cart 160 has three tanks 162, 164, and 166. Each tank has a corresponding metering system 168, 170, and 172 that meters material from the corresponding tanks into one or more of the primary delivery tubes 132.

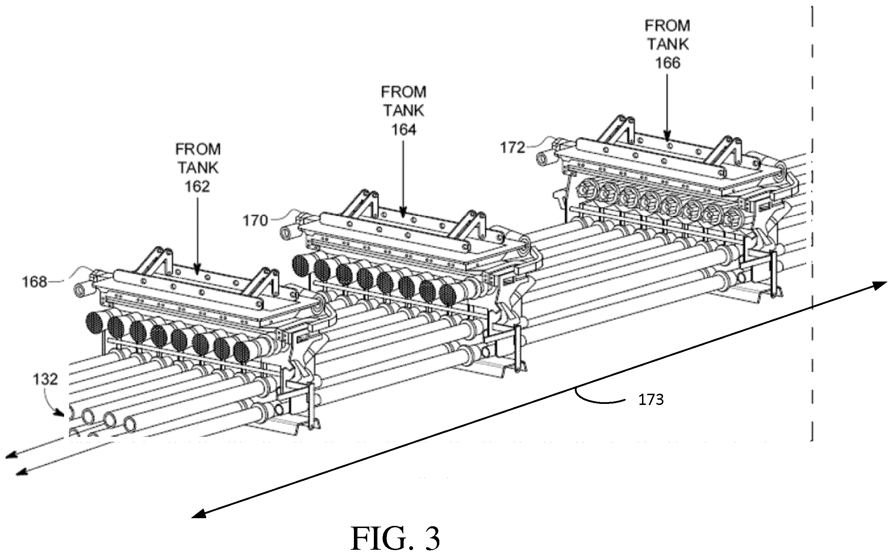

FIG. 3 shows a portion of air cart 160 with the tanks, wheels, and other portions removed, to show metering systems 168, 170, and 172 more clearly. FIG. 3 shows that material from tank 162 is metered by meter 168 into one or more of the primary delivery tubes 132 (not shown in FIG. 3).

Similarly, material from tank 164 is metered by metering system 170 into the primary delivery tubes 132, and material from tank 166 is metered by metering system 172 into the primary delivery tubes 132. Any number N of metering systems can meter any number of different materials into the same primary delivery tube 132. Therefore, the primary delivery tubes 132 may carry a single type of material, or a plurality of different types of material. It will also be noted that the tanks and corresponding meters 168, 170, and 172 are spaced relative to one another along a longitudinal axis of air cart 160 that is generally parallel to line 173 in FIG. 3.

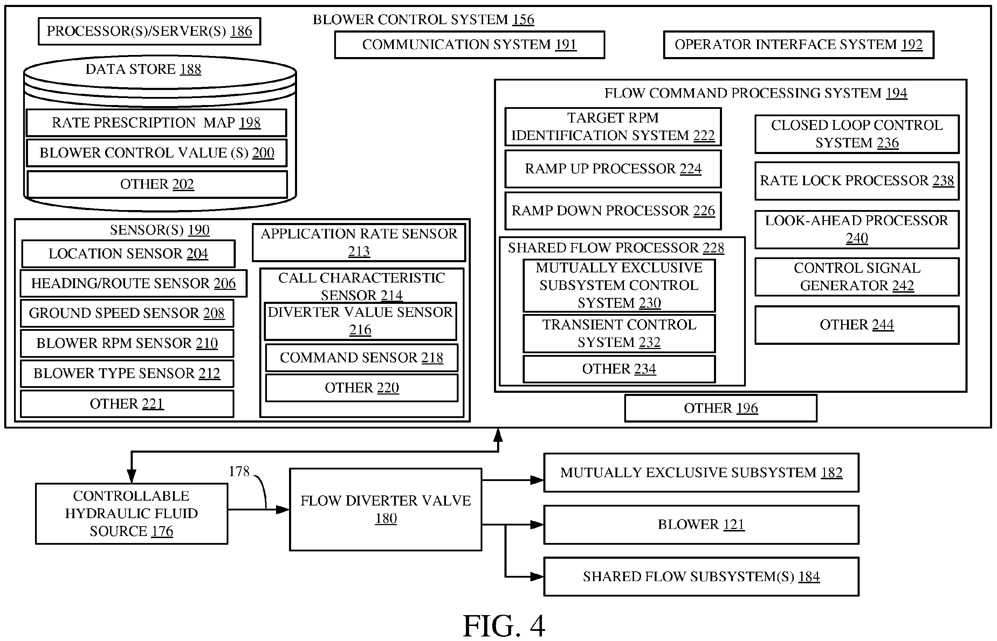

FIG. 4 is a block diagram showing one example of blower control system 156 in more detail. FIG. 4 also shows that blower control system 156 is coupled to controllable hydraulic fluid source 176. Controllable hydraulic fluid source 176 may be located on tractor 106 or elsewhere. Controllable hydraulic fluid source 176 provides hydraulic fluid under pressure through connection 178 to flow diverter valve 180. In the example shown in FIG. 4, flow diverter valve 180 diverts hydraulic fluid flow between a mutually exclusive subsystem 182 (such as material conveyance subsystem 127 shown in FIG. 1) and between blower 121 which may be on the same hydraulic circuit as any number of shared flow subsystems 184. The shared flow subsystems 184 may include actuators on tool 104 or any of a wide variety of other subsystems that receive hydraulic fluid along with blower 121.

In the example shown in FIG. 4, when flow diverter valve 180 is in a first position, it provides all of the hydraulic fluid flow from controllable hydraulic fluid source 176 to mutually exclusive subsystem 182. When flow diverter valve 180 is in a second position, it provides all of the hydraulic fluid flow from controllable hydraulic fluid source 176 to blower 121 and shared flow subsystem 184.

FIG. 4 shows that in one example, blower control system 156 can include one or more processors or servers 186, data store 188, sensors 190, communication system 191, operator interface system 192, flow command processing system 194, and any of a wide variety of other functionality 196. Data store 188 can store a rate prescription map 198 (or other prescribed application rate data that defines an application rate at different locations in a field), blower control values 200 and other items 202. Sensors 190 can include location sensor 204, heading/route sensor 206, ground speed sensor 208, blower rpm sensor 210, blower type sensor 212, application rate sensor 213, call characteristic sensor 214 (which, itself, can include diverter valve sensor 216, command sensor 218, or other items 220). Sensors 190 can include a wide variety of other sensors 221 as well. Flow command processing system 194 can include target rpm identification system 222, ramp up processor 224, ramp down processor 226, shared flow processor 228 (which can include mutually exclusive subsystem controller 230, transient control system 232, and other items 234), closed loop control system 236, rate lock processor 238, look-ahead processor 240, control signal generator 242, and any of a wide variety of other items 244. Before describing the operation of blower control system 156 in more detail, a description of some of the items in blower control system 156, and their operation, will first be provided.

Rate prescription map 198 may be a map of locations in a field that have a prescribed application rate (e.g., seed rate, fertilizer rate, etc.) mapped to the different regions in the field. Blower control values 200 may include hydraulic flow control values that are provided to controllable hydraulic fluid source 176 that map to different blower speeds (e.g., RPMs) for blower 121. There may be different sets of blower control values 200 for different types of blower 121.

Location sensor 204 may be a global navigation satellite system (GNSS) receiver, a dead reckoning sensor, a cellular triangulation sensor, or any of a wide variety of other sensors that provide a location of sensor 204 in a local or global coordinate system. Heading/route sensor 206 senses the heading or route of tractor 106 and/or air cart 108. Heading/route sensor 206 can include a navigation system that receives outputs from location sensor 204 and generates an output indicative of the heading or route of tractor 106 and/or air cart 108 based upon the outputs from location sensor 204. Heading/route sensor 206 can also include accelerometers, inertial measurement units, and/or any of a wide variety of other sensors. Ground speed sensor 208 generates an output indicative of the ground speed of tractor 106 and/or air cart 108. Ground speed sensor 208 may be a speedometer, or a sensor that senses the rotation of an axle, or sensor 208 may derive the ground speed from the outputs of other sensors. For instance, ground speed sensor 208 may receive a plurality of outputs from location sensor 204 and derive the ground speed from those outputs and the time lapsed between the outputs. Blower RPM sensor 210 senses the speed of blower 121. Sensor 210 can be a Hall effect sensor, a rotational sensor, or any of a wide variety of other sensors that generate an output indicative of the speed of blower 121. Blower type sensor 212 senses the type (e.g., make, model, size, etc.) of blower 121. The blower type can also be input by the operator of tractor 106 or in other ways. Application rate sensor 213 can sense the operation of the metering systems or be a flow rate sensor or another sensor that generates an output indicative of the application rate of commodity by air cart 108. Call characteristic sensor 214 senses a characteristic of the call for hydraulic fluid that is being provided by controllable hydraulic fluid source 176. The call may be a control signal from blower control system 156. The sensed characteristic may be indicative of which subsystems are calling for hydraulic flow or another characteristic. For example, diverter valve sensor 216 can sense the position of flow diverter valve 180. Command sensor 218 can sense the commanded position of flow diverter valve 180. Thus, call characteristic sensor 214 provides an output indicative of whether mutually exclusive subsystem 182 is calling for hydraulic flow.

Operator interface system 192 includes operator interface mechanisms that an operator can interact with in order to control and manipulate tractor 106, blower control system 156 and/or other items. The operator interface mechanisms can include a steering wheel, joysticks, linkages, levers, buttons, pedals, etc. In addition, the operator interface mechanisms can include a display device that displays an operator interface with user actuatable mechanisms that can be actuated by an operator to provide inputs. The operator actuatable input mechanisms can include links, icons, buttons, etc. An operator can interact with those mechanisms using a point and click device, speech commands, touch gestures, etc. Operator interface system 192 can also generate outputs to an operator such as audio, visual, haptic, or other outputs.

Communication system 191 can control communication of items of blower control system 156 with one another and with other items. Therefore, communication system 191 can include a controller area network (CAN) bus and bus controller, a wifi or local area network communication system, a cellular communication system, a wide area network communication system, a Bluetooth communication system, and/or another communication system.

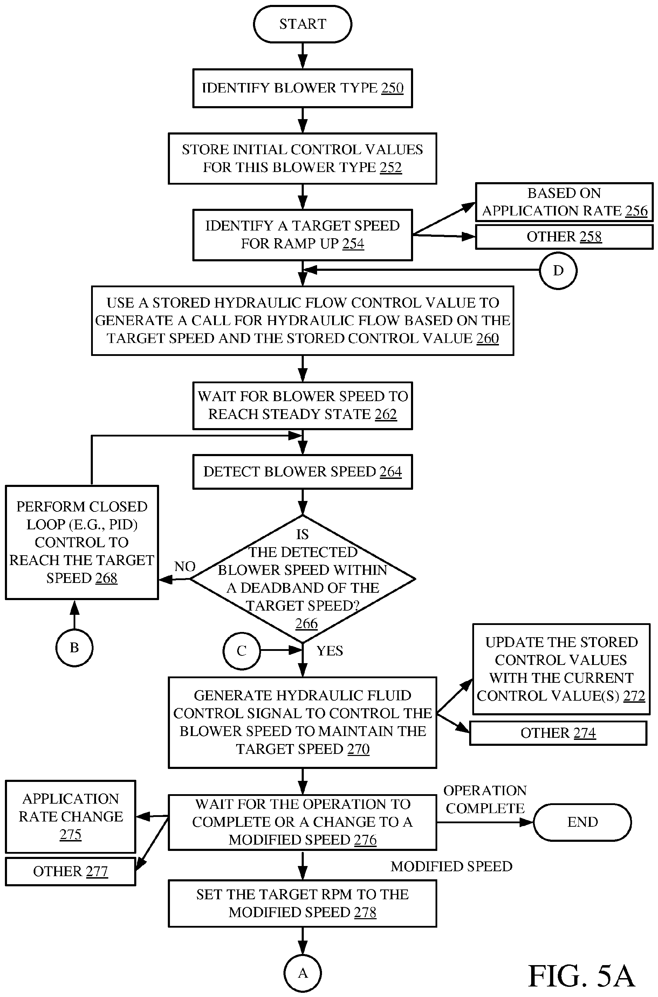

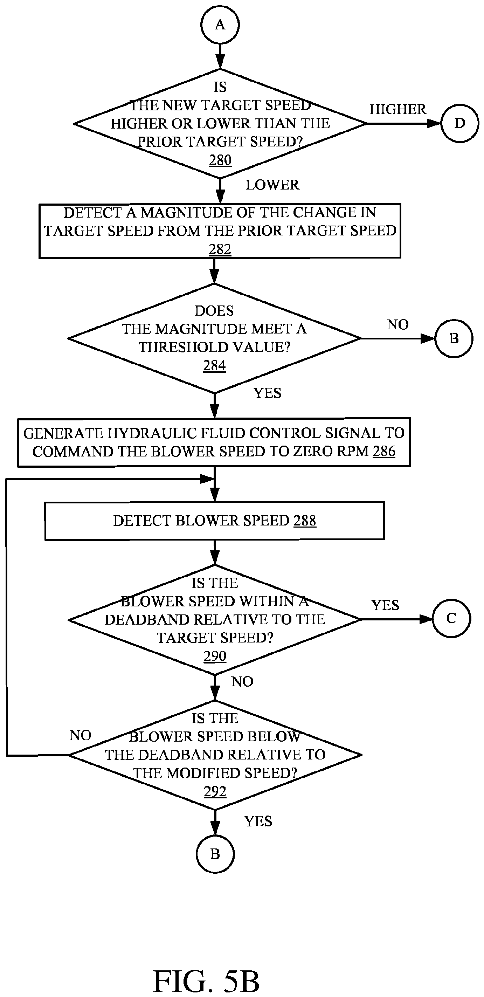

Flow command processing system 194 can access information in data store 128 and receive sensor inputs from sensors 190 and generate a control signal to control the controllable hydraulic fluid source 176 in order to control the speed of blower 121. Target RPM identification system 220 identifies a target speed for blower 121. The target speed may be based on a current application rate of commodity that is being applied by air cart 108, or based upon a prescribed application rate derived from rate prescription map 198 or in other ways. Ramp up processor 224 generates control signals to control blower 121 as it is ramping up from a lower speed to a higher speed. Ramp down processor 226 generates control signal to control blower 121 as it is ramping down from a higher speed to a lower speed. Shared flow processor 228 controls blower 121 when blower 121 shares hydraulic flow from controllable hydraulic fluid source 176 with another item. Mutually exclusive subsystem controller 230 controls blower 121 when blower 121 shares hydraulic flow with a mutually exclusive subsystem 182. Transient control system 232 controls blower 121 when blower 121 shares hydraulic fluid with a shared flow subsystem 184. Closed loop control system 236 performs closed loop control of blower 121 in different scenarios. Rate lock processor 238 controls blower 121 in scenarios (such as headland turns) where the application rate suddenly drops to zero. Look-ahead processor 240 controls blower 121 in a look-ahead manner by looking ahead along the route of air cart 108 to identify prescribed application rate values that may change at points in the future. Control signal generator 242 receives inputs from the other processors and systems in flow command processing system 194 and generates a control signal that is provided to controllable hydraulic flow source 176 to control the flow of hydraulic fluid to blower 121. FIGS. 5A and 5B (collectively referred to herein as FIG. 5) illustrate a flow diagram showing one example of the operation of ramp up processor 224 and ramp down processor 226 in controlling blower 121 as it ramps up from a lower speed to a higher speed and as it ramps down from a higher speed to a lower speed. In one example, target RPM identification system 222 receives an input from blower type sensor 212 identifying the blower type, as indicated by block 250 in the flow diagram of FIG. 5. The blower type can also be input by an operator through operator interface system 192 as well, or the blower type can be identified in other ways. Communication system 191 can then download the blower control values 200 for the identified blower type, if they are not already stored for access by target RPM identification system 222. Storing the initial set of control values for the identified blower type is indicated by block 252 in the flow diagram of FIG. 5. Target RPM identification system 222 then identifies a target RPM to which blower 121 will ramp up, as indicated by block 254. For instance, target RPM identification system 222 can identify an application rate that air cart 108 is using to apply material to the field, as indicated by block 256. Given that application rate, target RPM identification system 222 can access the blower control values 200 that not only map blower speed for the identified blower type to application rate values but may also map blower speed to control signal values that are applied to controllable hydraulic fluid source 176 to obtain the hydraulic fluid flow used to achieve the target speed for blower 121. The target speed identification system 222 can identify the target speed in other ways as well, as indicated by block 258. Once the target speed has been identified, the target RPM identification system 222 can obtain a control value that will be used to control controllable hydraulic fluid source 176 to call for hydraulic fluid flow that will generate the target RPM on blower 121. Using the stored control value is indicated by block 260 in the flow diagram of FIG. 5. The control value is provided to control signal generator 242 which generates the control signal to control the controllable hydraulic fluid source 176.

Ramp up processor 224 then performs ramp up processing to control blower 121 while it ramps up to the target speed. In one example, ramp up processor 224 receives blower speed sensor signals from blower RPM sensor 210. Ramp up processor 224 monitors the blower speed sensor signals and waits for the blower speed to reach a steady state value (where it is no longer significantly increasing over time), as indicated by block 262 in the flow diagram of FIG. 5. The blower speed at stead state is then compared to the target speed to determine whether the blower speed is within a threshold value (e.g., a dead band value) of the target speed. Detecting the blower speed is indicated by block 264 in the flow diagram of FIG. 5 and determining whether the current blower speed is within a dead band or threshold value of the target speed is indicated by block 266.

If the blower speed is not yet within a dead band or threshold value of the target speed, then closed loop control system 236 begins controlling the blower 121 in a closed loop fashion (e.g., using a PID control algorithm) until the blower speed reaches the target speed (or is within a threshold or dead band value of the target speed) as indicated by block 268. Once the blower speed is within the dead band or threshold value of the target speed, then closed loop control system 236 continues to control the blower speed to maintain the target speed, as indicated by block 270 in the flow diagram of FIG. 5. Also, if the initial control value did not cause the speed of blower 121 to reach the target speed, then closed loop control system 236 updates the blower control values 200 to the current control value which is being used to maintain blower 121 at the target speed. Updating the stored control values with the current control value is indicated by block 272 in the flow diagram of FIG. 5.

Closed loop control system 236 can control the blower speed in other ways as well, as indicated by block 274. Closed loop control system 236 continues to control blower 121 to maintain the target speed until the application operation is complete, or until the target speed changes to a different or modified speed. Waiting for the operation to complete or change to a modified speed is indicated by block 276 in the flow diagram of FIG. 5. If the target speed identification system 222 determines that the target speed for blower 121 is now modified (e.g., perhaps the application rate increased or decreased, etc.) then target RPM identification system 222 sets the target speed to the modified value, as indicated by block 278 in the flow diagram of FIG. 5. If the modified value is higher than the immediately previous target speed, as determined at block 280, then processing reverts to block 260 where the blower control value 200 for the modified target speed is accessed and used by ramp up processor 224 and closed loop control system 236 to ramp the speed of blower 121 up to the modified target speed.

However, if, at block 280, it is determined that the modified target speed is lower than the immediately prior target speed, then ramp down processor 226 controls blower 121 to ramp down to the modified target speed value. In doing so, ramp down processor 226 first detects the magnitude of change in the target speed between the immediately prior target speed and the modified target speed. Detecting the magnitude of the change in blower speed is indicated by block 282 in the flow diagram of FIG. 5. If the magnitude of the blower speed is relatively small (e.g., it does not meet a threshold value), then processing reverts to block 268 where closed loop control system 236 again controls blower speed 121 until blower 121 reaches the modified target speed. However, if the magnitude of the change in blower speed is relatively large (e.g., it does meet a threshold value) as indicated by block 284, then ramp down processor 226 commands the blower speed to 0 RPM, as indicated by block 286. This causes the speed of blower 121 to begin ramping down. Ramp down processor 226 receives an input from blower RPM sensor 210 and continues to detect the blower speed, while commanding the blower speed to zero, as indicated by block 228. If the blower speed has slowed enough so it is within a dead band or threshold value of the modified target speed, as determined at block 290, then processing continues at block 270 where closed loop control system 236 controls blower 121 in a closed loop fashion to maintain the blower speed at the modified target speed.

However, if, at block 290, it is determined that the blower speed is not within the dead band or threshold value of the modified target speed, then ramp down processor 226 determines whether the blower speed has slowed too much so that it has dropped below the dead band or threshold value of the modified target speed, as determined at block 292. If no, so the blower speed is still above the threshold or dead band value of the modified target speed, then processing continues at block 288 where ramp down processor 226 continues to command the blower speed to zero RPM and continues to detect the blower speed, as it shows. However, if, at block 292, ramp down processor 226 determines that the blower speed has slowed too much so that it is below the threshold or dead band value of the modified target speed, then the blower speed needs to be ramped up again, and processing reverts to block 268 where closed loop control system 236 controls blower 121 in a closed loop fashion to ramp it up so that the blower speed was within the dead band or threshold value of the modified target speed.

It can thus be seen that, in one example, flow command processing system 194 can use initial, stored, blower control values 200 to generate a control signal to call for hydraulic flow to control blower 121 to generate a target speed. However, if those initial control signals are not accurate, they will automatically be updated once blower 121 is at its target speed. Also, because it can take a relatively long time for blower 121 to ramp down to a slower speed from a higher speed, in accordance with one example, flow command processing system 194 automatically reduces the commanded blower speed to zero during a significant ramp down process, until the blower speed comes to within a dead band value of the new target speed at which point closed loop control is again resumed.

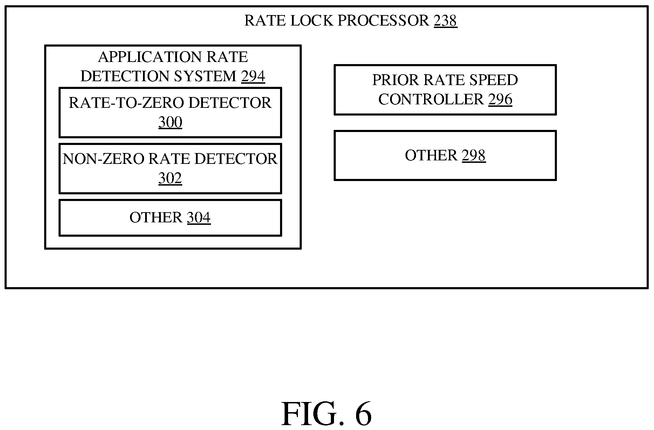

FIG. 6 is a block diagram showing one example of rate lock processor 238 in more detail. As shown in FIG. 6, rate lock processor 238 includes application rate detection system 294, prior rate RPM controller 296, and other items 298. Application rate detection system 294 can include rate-to-zero detector 300, non-zero rate detector 302, and other items 304. Rate-to-zero detector 300 receives an input indicating a current application rate of material being applied by air cart 108. The application rate can be sensed by application rate sensor 213. Application rate sensor 213 can be coupled to the metering systems on air cart 108 to detect the rate at which the meters are metering commodity into the primaries. Application rate sensor 213 can also sense the application rate command signal commanding an application rate, or an operator input setting the application rate. The current application rate can be sensed or detected in other ways as well.

Rate-to-zero detector 300 detects when the application rate drops suddenly (e.g., within a time window) to zero. For instance, as air cart 108 reaches the end of a pass and tractor 106 begins a headland turn, the application rate will drop immediately to zero. This is detected by rate-to-zero detector 300. Non-zero rate detector 302 may also receive an input from application rate sensor 213 and detect when a non-zero rate is detected. For instance, once tractor 106 finishes the headland turn and beings a next pass, then the application rate will return to a non-zero value. Prior rate RPM controller 296 receives an output from rate-to-zero detector 300 indicating that the application rate has quickly dropped to zero. Prior rate RPM controller 296 maintains the blower speed 121 at its prior speed (the speed used at the end of the prior pass) until non-zero rate detector 302 detects that the application rate has returned to a non-zero value, at which point the blower speed is again controlled based on application rate.

In this way, when tractor 106 begins a headland turn and the application rate drops to zero, the speed of blower 121 is maintained at its current speed until tractor 106 completes the headland turn and begins another pass, at which point the application rate will return to a non-zero value. Prior rate RPM controller 296 can then allow closed loop controller system 236 to continue controlling the speed of blower 121 based upon the newly detected non-zero application rate. This enables blower 121 to avoid the scenario where it is turned off during a headland turn and then is turned on again when the next pass starts. This avoids the need to ramp the speed of blower 121 down to zero when the end of the pass is reached and then ramp it back up to another target speed when the next pass begins. Instead, the speed of blower 121 is maintained during the headland turn and is simply adjusted when the next non-zero application rate value is detected.

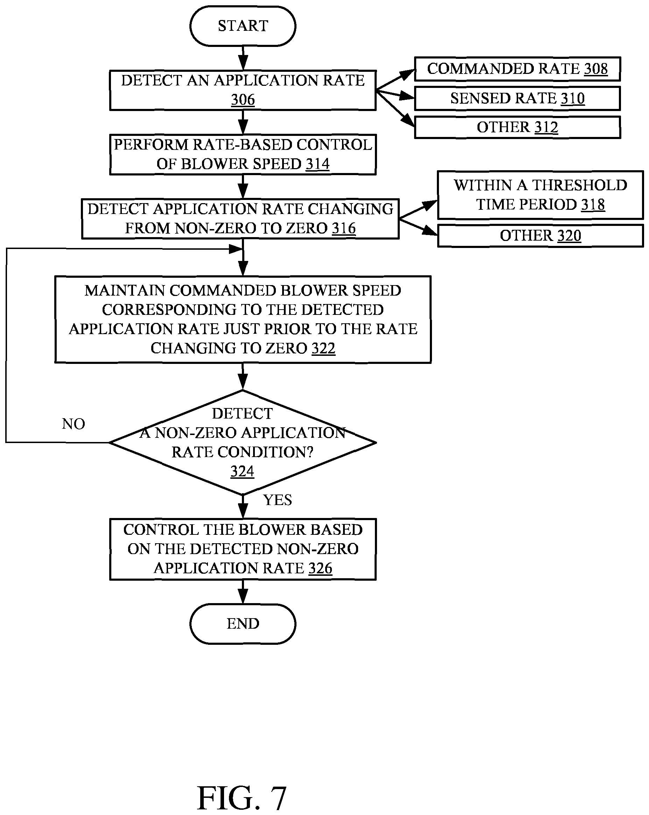

FIG. 7 is a flow diagram showing one example of the operation of rate lock processor 138 in more detail. In one example, the application rate is detected by flow command processing system 194 (such as based on an input from application rate sensor 213) as indicated by block 306 in the flow diagram of FIG. 7. The application rate can be detected based upon an operator input or another indication of the commanded application rate, as indicated by block 308. The application rate can be sensed as indicated by block 310, or obtained in another way, as indicated by block 312.

Flow command processing system 194 then performs rate-based control of the blower speed of blower 121, as indicated by block 314. At some point, rate-to-zero detector 300 detects that the application rate changes from a non-zero value to zero, as indicated by block 316 in the flow diagram of FIG. 7. In one example, rate-to-zero detector 300 detects that the application rate drops to zero within a threshold time period (such as instantaneously, within several seconds, etc.) as indicated by block 318. Rate-to-zero detector 300 can detect that the application rate has dropped to zero in other ways as well, as indicated by block 320.

Prior rate RPM controller 296 then maintains the commanded blower speed as if the application rate was the same as the application rate just prior to the rate dropping to zero. For instance, assume that the application rate during the previous pass was 200 pounds per acre so that the commanded blower speed was 1,500 RPM. When the application rate drops to zero (such as at the beginning of a headland turn) prior rate RPM controller 296 continues to control blower 121 to command a speed of 1,500 RPM. Maintaining the commanded blower speed in this way is indicated by block 322 in the flow diagram of FIG. 7. The blower speed 121 is maintained at this level until a non-zero rate detector 302 detects a non-zero application rate, as indicated by block 324 in the flow diagram of FIG. 7. Once the non-zero application rate is detected, then flow command processing system 194 controls the blower speed based on the detected non-zero application rate, as indicated by block 326 in the flow diagram of FIG. 7.

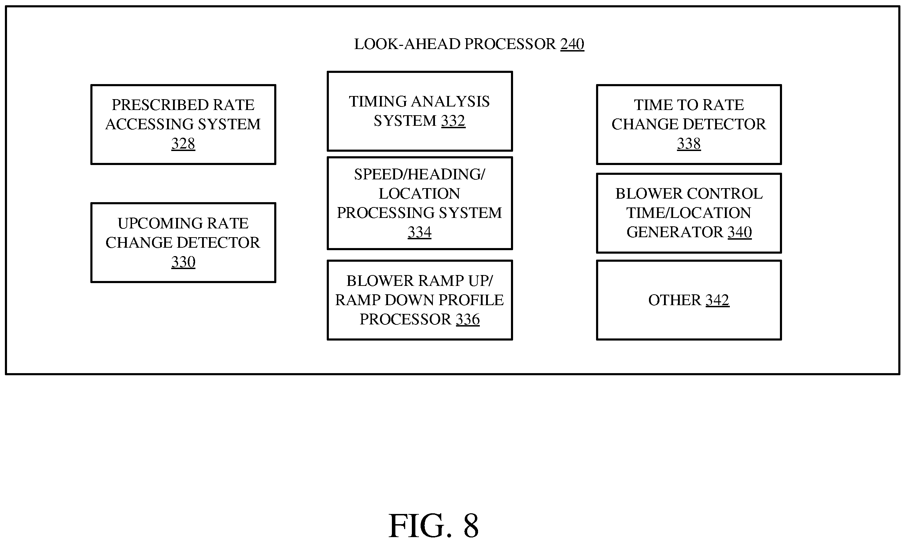

FIG. 8 is a block diagram of one example of look-ahead processor 240, in more detail. In the example shown in FIG. 8, look-ahead processor 240 includes prescribed rate accessing system 328, upcoming rate change detector 330, timing analysis system 332, speed/heading/location processing system 334, blower ramp up/ramp down profile processor 336, time-to-rate change detector 338, blower control time/location generator 340, and other items 342. Recall that look-ahead processor 240 detects an upcoming application rate change so that blower 121 can be controlled ahead of time to reach its desired target speed corresponding to the new application rate once the application rate change occurs.

Blower control time/location generator 340 determines a time and/or location where processor 240 should begin changing the speed of blower 121 so that it reaches the target speed corresponding to the application rate when the rate change occurs. Therefore, prescribed rate accessing system 328 can access the rate prescription map 198 to identify prescribed application rate values for the field that air cart 108 is treating. Speed/heading/location processing system 334 can identify the current location of the air cart 108 along with the route or heading and speed of the air cart 108 based upon various sensor signals. Upcoming rate change detector 330 detects that, given the current route of air cart 108, an application rate change is about to occur (e.g., air cart 108 will soon reach a location on its current route where a prescribed application rate change occurs). Time-to-rate change detector 338 can identify how long it will take air cart 108 to reach the position in the field where the application rate changes. Blower ramp up/ramp down profile processor 336 accesses blower information indicating how quickly this particular blower 121 (or this make and model of blower 121) can ramp up and ramp down. Timing analysis system 332 determines how quickly blower 121 reacts and therefore how quickly blower 121 can ramp up or down from its current speed to the new speed (for the new application rate that is about to change). Based on the information from detectors 330, 338, and systems 328, 332, 334, 336, blower control time/location generator 340 identifies a location where air cart 108 will be when the blower 121 needs to begin ramping up or ramping down to reach its target speed when air cart 108 reaches the location of the rate change. Blower control time/location generator 340 may instead, or in addition, identify a time when the blower 121 must be controlled to ramp up or ramp down so that it reaches its new target speed by the time air cart 108 reaches the location of the rate change. Look-ahead processor 240 generates an output to ramp up processor 224 or ramp down processor 226 indicating when processor 224 or processor 226 should begin controlling blower 121 to ramp up or ramp down to the new blower speed based on the upcoming application rate change. In this way, look-ahead processor 240 can provide information so that the control of blower 121 can be initiated ahead of time (prior to an application rate change) so that blower 121 reaches the target RPM for the changed application rate when the application rate change occurs. This avoids a scenario where the amount of material being metered into the primaries changes (increases or decreases) before the blower speed has changed accordingly.

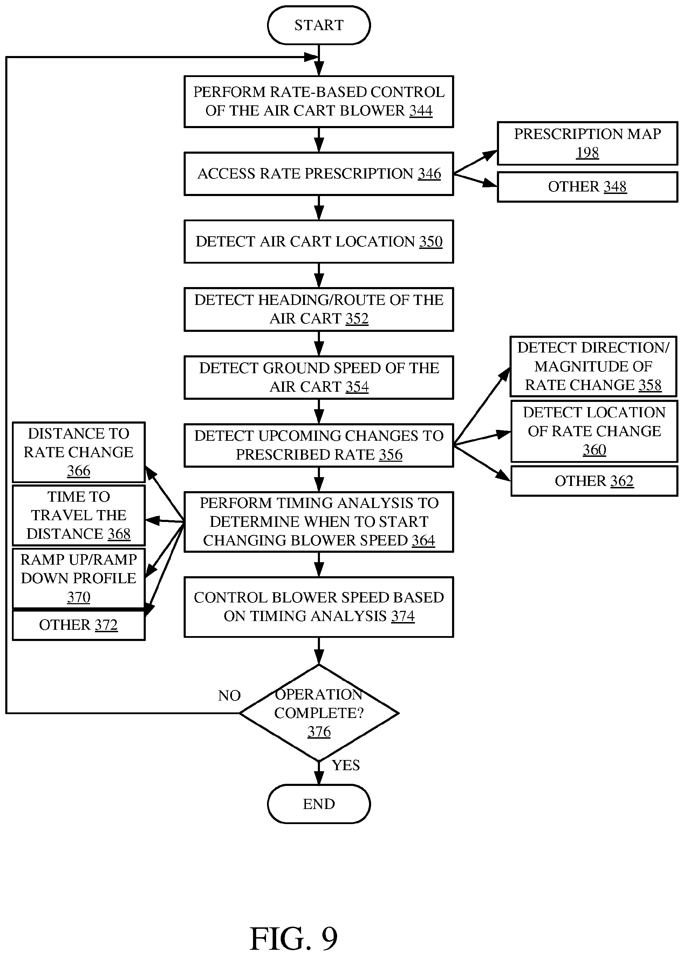

FIG. 9 is a flow diagram illustrating one example of the operation of look-ahead processor 240 in more detail. Flow command processing system 194 performs rate-based control of the air cart blower 121, as indicated by block 344.

Prescribed rate accessing system 328 then accesses the rate prescription 198 in data store 188 or elsewhere, as indicated by block 346. The rate prescription can be in the form of a prescription map 198, or another prescription 348. Upcoming rate change detector 330 then detects the location of air cart 108, such as by receiving an input from location sensor 204. Detecting the air cart location is indicated by block 350 in the flow diagram of FIG. 9. Speed/heading/location processing system 334 then detects the heading or route of air cart 108, as indicated by block 352. For instance, system 334 can receive a heading/route sensor signal from sensor 206 or detect the heading and route of air cart 108 in other ways. Upcoming rate change detector 330 also detects the ground speed of air cart 108, such as by receiving a signal from ground speed sensor 208 or in another way. Detecting the ground speed of air cart 108 is indicated by block 354 in the flow diagram of FIG. 9. Based upon the location and route of air cart 108, as well as its ground speed, upcoming rate change detector 330 can analyze the prescribed application rate (e.g., prescription map 198) to detect upcoming changes to the prescribed rate of material to be applied to the field. Detecting upcoming changes to the prescribed rate is indicated by block 356 in the flow diagram of FIG. 9. Upcoming rate change detector 330 can also detect the direction and/or magnitude of the rate change (such as whether the rate is to increase or decrease and by what amount) as indicated by block 358 in the flow diagram of FIG. 9.

Upcoming rate change detector 330 then also detects the location of the rate change, as indicated by block 330. The upcoming rate change can be detected in other ways as well, as indicated by block 362.

Blower control time/location generator 340 then determines when and/or where the blower 121 should begin to ramp up/down so blower 121 is at the proper speed when the rate change occurs as indicated by block 364. For instance, timing analysis system 332 then performs timing analysis to determine how long it will take the blower 121 to ramp up or down to the speed corresponding to the upcoming application rate. Performing the timing analysis based on the blower ramp up/ramp down profile is indicated by block 370 in the flow diagram of FIG. 9. Upcoming rate change detector 330 can calculate the distance to the location on the field where the rate change is to occur, as indicated by block 366. Time to rate change detector 338 can calculate the time to travel that distance, based upon the route and speed of air cart 108, as indicated by block 368. Other timing analysis steps can be performed to identify when and/or where the blower 121 should be controlled based on the upcoming rate change, as indicated by block 372 in the flow diagram of FIG. 9.

Look-ahead processor 240 then provides an output to control signal generator 242 to control the blower speed based on the timing analysis, as indicated by block 374 in the flow diagram of FIG. 9. For instance, look-ahead processor 240 can provide an output to control signal generator 242 sufficiently ahead of the rate change so that the blower 121 can be ramped up or ramped down to its new speed by the time the rate change occurs. Processing continues in this way until the operation is complete, as indicated by block 376 in the flow diagram of FIG. 9.

Thus, it can be seen that in the example described with respect to FIG. 9, the blower speed can be adjusted ahead of a change in application rate to accommodate that application rate. For instance, when the application rate is increased, unless the blower speed is also increased, the primaries may become plugged. Therefore, the present description with respect to FIG. 9 ensures that the blower speed will reach its target level to accommodate the increased application rate, before the application rate is actually increased. This reduces the likelihood of plugging the primaries thus enabling more efficient operation.

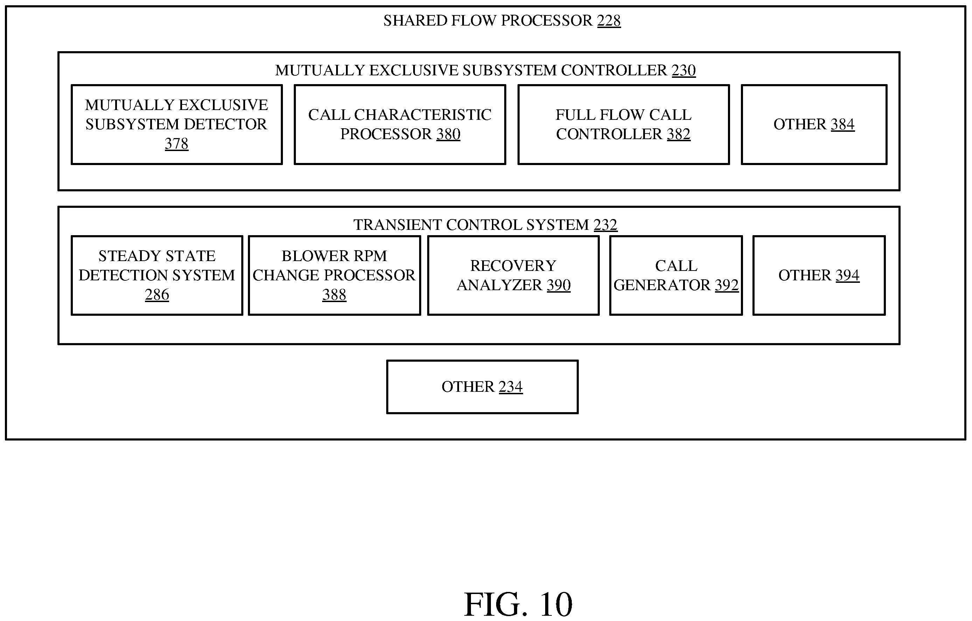

FIG. 10 is a block diagram showing one example of shared flow processor 228 in more detail. Mutually exclusive subsystem controller 230 can include mutually exclusive subsystem detector 378, call characteristic processor 380, full flow call controller 382, and other items 384. Transient control system 232 can include stead state detection system 286, blower RPM change processor 388, recovery analyzer 390, call generator 392, and other items 394. Mutually exclusive subsystem detector 378 detects when blower 121 shares hydraulic flow from controllable hydraulic fluid source 176 in a mutually exclusive way, with a mutually exclusive subsystem 182. Call characteristic processor 380 determines whether mutually exclusive subsystem 182 is calling for hydraulic fluid flow from hydraulic fluid source 176 and fluid flow call controller 382 generates a control signal to control the controllable hydraulic fluid source 186 to provide full hydraulic flow through conduit 178 so that the full flow is available to mutually exclusive subsystem 182. Then, any other control system that is controlling the fluid flow to mutually exclusive subsystem 182 has access to the full output from controllable hydraulic fluid source 178.

Steady state detection system 286 detects whether blower 128 is operating in a stead state (so that the speed of blower 121 has not changed by a threshold amount over a period of time). Blower RPM change processor 388 detects when the blower speed changes by a threshold amount.

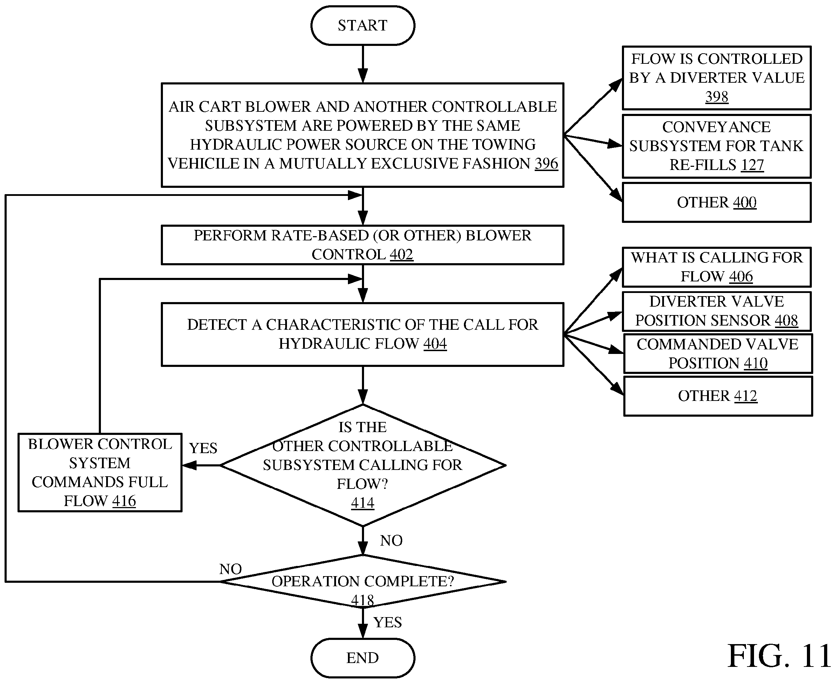

Recovery analyzer 390 determines whether the blower speed has recovered to its target speed within a recovery time period, and call generator 392 generates a call for hydraulic flow based upon the target speed of blower 121 and the detected speed. Thus, recovery analyzer 390 can determine whether the reduction or change in blower speed is transient because another subsystem 184 is momentarily calling for hydraulic fluid flow, or whether it is longer lasting, so that call generator 392 should increase its call for hydraulic fluid flow to blower 121 to achieve the target blower speed. For instance, transient control system 232 can detect when the blower speed decreases because a shared flow subsystem 184 is calling for flow, momentarily. Recovery analyzer 390 then determines whether the speed of blower 121 recovers (because the shared flow subsystem 184 stops calling for hydraulic flow) within a threshold time period. If not, call generator 392 can increase the call for hydraulic flow so that blower 121 recovers its target speed. FIG. 11 is a flow diagram illustrating one example of the operation of mutually exclusive subsystem controller 230 in more detail. It is first assumed that mutually exclusive subsystem detector 378 detects that the air cart blower 121 and another controllable subsystem 182 are powered by the same hydraulic power source 176 on the towing vehicle (e.g., tractor 106) in a mutually exclusive fashion, as indicated by block 396 in the flow diagram of FIG. 11. This can be based on an operator input or a sensed input. In one example, the flow of hydraulic fluid to blower 121 and mutually exclusive subsystem 182 is controlled by a diverter valve 180, as indicated by block 398 in the flow diagram of FIG. 11. By way of example, the mutually exclusive subsystem 182 may be the material conveyance subsystem 127 on the air cart. The blower may be coupled to the mutually exclusive subsystem 182 in other ways as well, as indicated by block 400 in the flow diagram of FIG. 11.

Flow command processing system 194 performs rate-based control of blower 121, as indicated by block 402 in the flow diagram of FIG. 11.

Call characteristic processor 380 then detects a characteristic of the call for hydraulic flow from controllable hydraulic fluid source 178, as indicated by block 404 in the flow diagram of FIG. 11. In one example, call characteristic processor 380 detects which subsystems are calling for hydraulic flow, as indicated by block 406. For instance, call characteristic processor 380 receives an input from diverter valve sensor 216 detecting the position of flow diverter valve 180 to determine whether valve 180 is diverting flow to blower 121 or to mutually exclusive subsystem 182. Detecting the diverter valve position from diverter valve sensor 216 is indicated by block 408 in the flow diagram of FIG. 11. In another example, call characteristic processor 380 detects the command to flow diverter valve 180 commanding its position, based on a signal from command sensor 218, as indicated by block 410 in the flow diagram of FIG. 11. The characteristic of the call for hydraulic flow can be performed in other ways as well, as indicated by block 412.

Based on the call characteristic, full flow call controller 382 determines whether the mutually exclusive subsystem 182 is calling for hydraulic flow, as indicated by block 414 in the flow diagram of FIG. 11. If so, then full flow call controller 382 provides an output commanding controllable hydraulic fluid source 176 to provide full hydraulic flow as indicated by block 416 in the flow diagram of FIG. 11. If the mutually exclusive subsystem 182 is not calling for hydraulic flow, then, until the operation is complete (as determined at block 418 in the flow diagram of FIG. 11) or until the mutually exclusive subsystem 182 calls for hydraulic flow. processing reverts to block 402 where blower 121 is controlled based on the application rate.

Therefore, it can be seen that in the example described with respect to FIG. 11, the system automatically detects when blower 121 shares hydraulic flow with another subsystem 182 in a mutually exclusive manner. When the other subsystem 182 is calling for hydraulic flow, the system automatically detects this and automatically commands the controllable hydraulic fluid source 176 to provide a full hydraulic flow output so that the other subsystem 182 has access to the full flow capacity of the hydraulic system. In that way, the flow command processing system 194 is not artificially limiting the hydraulic flow available to other subsystems from controllable hydraulic fluid source 176.

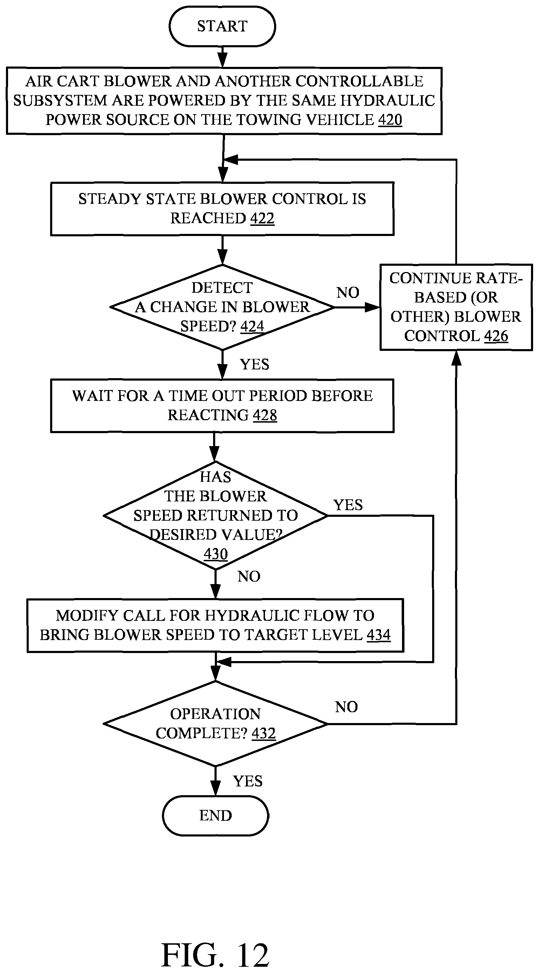

FIG. 12 is a flow diagram illustrating one example of the operation of transient control system 232 in more detail. It is first assumed that the air cart blower 121 and another controllable subsystem 184 are powered by the same controllable hydraulic fluid source 176 on towing vehicle 106, or elsewhere, as indicated by block 420 in the flow diagram of FIG. 12. Stead state detection system 286 detects that blower 121 has reached a steady state speed, meaning that the blower speed has not changed outside a threshold amount in a steady state time period (which may be several seconds, a minute, etc.). Determining that the blower speed has reached steady state is indicated by block 422 in the flow diagram of FIG. 12.

Blower RPM change processor 388 then detects a change in the speed of blower 121 (such as by receiving a blower speed sensor signal from sensor 210) as indicated by block 424 in the flow diagram of FIG. 12). Until a change in blower speed is detected, flow command processing system 194 continues rate-based control (or other control) of the speed of blower 121, as indicated by block 426.

However, once a change is detected, then recovery analyzer 390 begins to count a time out period so that transient control system 232 can determine whether the change in blower speed is transient in nature (such as may happen when another shared flow subsystem 184 momentarily calls for hydraulic flow). Waiting for a time out period before reacting is indicated by block 428 in the flow diagram of FIG. 12. During the time out period, recovery analyzer 390 determines whether the blower speed has returned to the target value, as indicated by block 430. If so, then, until the operation is complete, as determined at block 432, the system continues to perform rate-based control of blower 121. However, if the blower speed has not recovered to its target value as determined at block 430, then call generator 392 generates an output to modify the control signal provided to controllable hydraulic fluid source to modify the call for hydraulic flow to bring the blower speed back to its target level. Modifying the call for hydraulic flow when the blower speed has not recovered is indicated by block 434 in the flow diagram of FIG. 12.

It can thus be seen that, in the example described with respect to FIG. 12, the blower speed control system will not react to a reduction or another change in blower speed, if that change is transient in nature, such as may happen when another subsystem that shares hydraulic fluid flow with blower 121 momentarily calls for additional hydraulic flow or momentarily calls for reduced hydraulic flow. If the blower speed control system were to react to a transient change, this would affect the amount of flow received at the shared flow subsystem 184 as well. Thus, that subsystem 184 would again change its call for hydraulic flow which would, in turn, result in a change in blower speed when subsystem 184 changes calling for hydraulic flow. Instead, by simply waiting for a transient time period to determine whether the change in blower speed is transitory, the system reduces the number of blower control operations, resulting in more stable operation of the blower control system.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays them has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein. Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, analyzers and/or logic. It will be appreciated that such systems, components, analyzers and/or logic can be comprised of hardware items (such as processors and associated memory, or other processing components, some of which are described below) that perform the functions associated with those systems, components, generators, analyzers and/or logic. In addition, the systems, components, generators, analyzers and/or logic can be comprised of software that is loaded into a memory and is subsequently executed by a processor or server, or other computing component, as described below. The systems, components, generators, analyzers and/or logic can also be comprised of different combinations of hardware, software, firmware, etc., some examples of which are described below. These are only some examples of different structures that can be used to form the systems, components, generators, analyzers and/or logic described above. Other structures can be used as well.

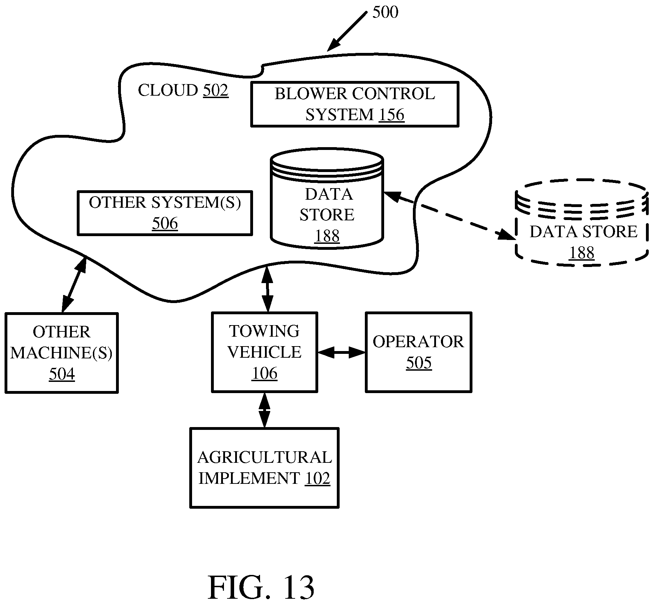

FIG. 13 is a block diagram of system 100, shown in FIGS. 1-4, except that system 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

In the example shown in FIG. 13, some items are similar to those shown in previous FIGS. and they are similarly numbered. FIG. 13 specifically shows that system 156 and data store 188, as well as other systems 566 can be located at a remote server location 502. Therefore, system 100 accesses those systems through remote server location 502. FIG. 13 also shows that other machines 504 can also communicate with the items in cloud 502 and with vehicle 106 through cloud 502. FIG. 13 also depicts another example of a remote server architecture. FIG. 13 shows that it is also contemplated that some elements of previous FIGS are disposed at remote server location 502 while others are not. By way of example, data store 188 can be disposed at a location separate from location 502, and accessed through the remote server at location 502. Regardless of where the items are located, the items can be accessed directly by system 100, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the tractor comes close to the fuel truck for fueling, the system automatically collects the information from the tractor using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the tractor until the tractor enters a covered location. The tractor, itself, can then send the information to the main network.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

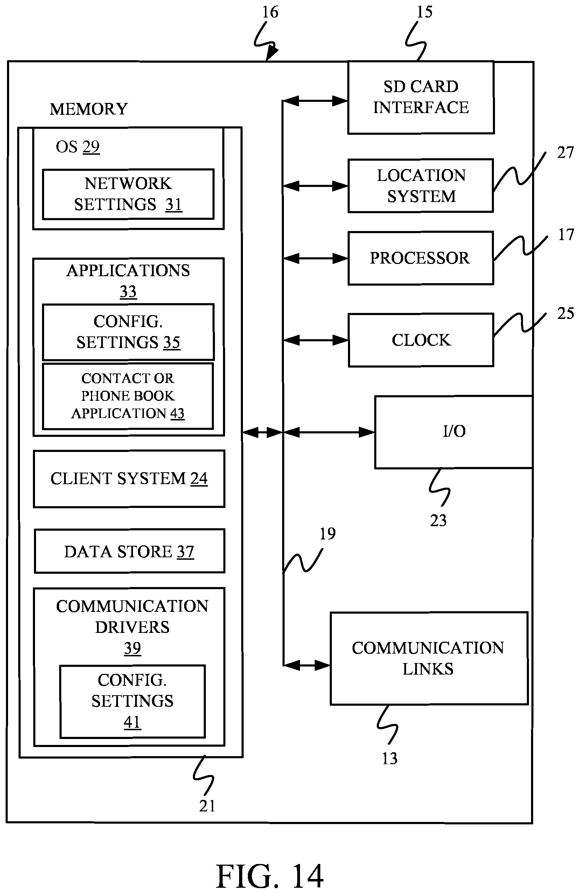

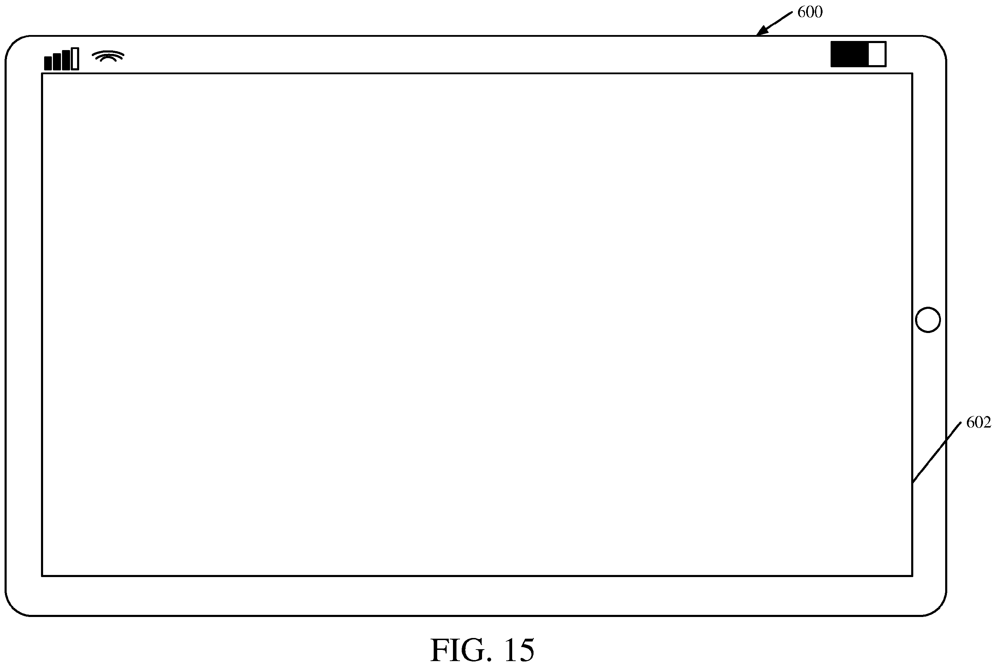

FIG. 14 is a simplified block diagram of one illustrative example of a handheld or mobile computing device that can be used as a user's or client's hand held device 16, in which the present system (or parts of it) can be deployed. For instance, a mobile device can be deployed in the operator compartment of tractor 106 for use in generating, processing, or displaying the yaw rate or meter control data. FIGS. 15-16 are examples of handheld or mobile devices.

FIG. 14 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. System 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 15 shows one example in which device 16 is a tablet computer 600. In FIG. 15, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

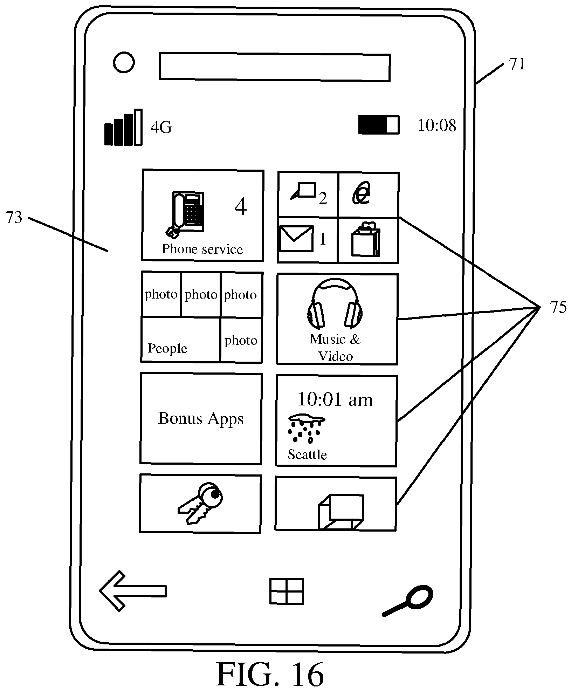

FIG. 16 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

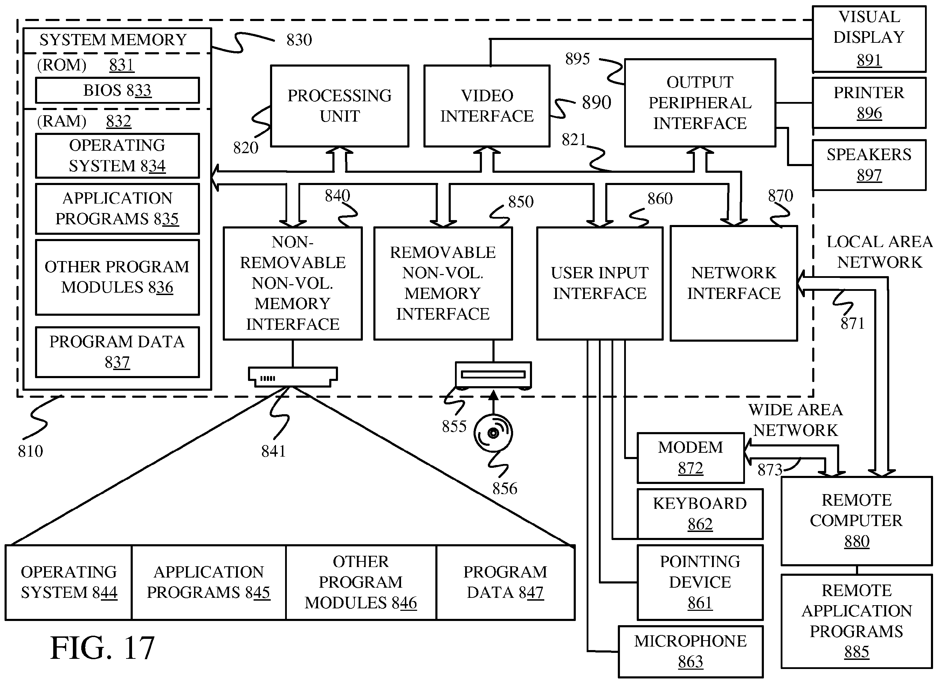

FIG. 17 is one example of a computing environment in which elements of previous FIGS., or parts of it, (for example) can be deployed. With reference to FIG. 17, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 17.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 17 illustrates operating system 834, application programs 835, other program modules 836, and program data 837.

The computer 810 may also include other removable/non-removable volatile/nonvolatile computer storage media. By way of example only, FIG. 17 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 17, provide storage of computer readable instructions, data structures, program modules and other data for the computer 810. In FIG. 17, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 17 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of controlling a blower on an agricultural air cart, comprising:
identifying (314) a first target blower speed based on a first application rate at which material is applied to a field from the agricultural air cart;
controlling (314) the blower based on the first target blower speed;
detecting (316) a reduction of the application rate to zero within a threshold time period;
controlling (322) the blower to maintain the first target blower speed after the application rate is zero;
detecting (324) an application rate change to a non-zero application rate;
identifying (326) a second target blower speed based on the non-zero application rate; and
controlling (308) the blower based on the second target blower speed.

2. The method of claim 1, wherein identifying an application rate change, comprises:
detecting (308) a commanded application rate change.

3. The method of claim 1 or 2, wherein identifying an application rate change, comprises:
sensing (310) the application rate; and
determining (324) that the sensed application rate is non-zero.

4. The method of one of the claims 1 to 3, wherein controlling the blower based on the second target blower speed comprises:
accessing (360) a set of stored blower control values to identify a hydraulic fluid control signal value based on the second target blower speed;
controlling (260) a controllable hydraulic fluid source to provide hydraulic fluid to the blower based on the hydraulic fluid control signal value; and
generating (268) a closed loop hydraulic fluid control signal value to bring the blower speed within a threshold value of the second target blower speed.

5. The method of one of the claims 1 to 4, wherein controlling the blower based on the second blower speed comprises:
detecting (280) that the second target blower speed is slower than the first target blower speed;
detecting (282) a magnitude of a difference between the first target blower speed and the second target blower speed; and
if the magnitude of the difference between the first target blower speed and the second target blower speed meets a difference threshold value (284) , then before generating (268) the closed loop control signal value, controlling (286) the controllable hydraulic fluid source to stop providing hydraulic fluid to the blower.

6. The method of one of the claims 1 to 5, wherein controlling the blower based on the second blower speed comprises:
detecting (288) a sensor signal indicative of detected blower speed; and
if the detected blower speed is within a threshold value of the second target blower speed (290), controlling (270) the controllable hydraulic fluid source based on the second hydraulic fluid control signal value.
